# EUROPÄISCHE PATENTSCHRIFT

(11) **EP 1 897 035 B1**
(45) Veröffentlichungstag und Bekanntmachung des Hinweises auf die Patenterteilung: **05.03.2014**
(21) Anmeldenummer: 06754404.9
(22) Anmeldetag: 16.06.2006
(51) Int. Cl.: G06K 19/02, B32B 27/36, B32B 37/15, B42D 25/36, B42D 25/455, B42D 25/46

(54) **THERMOGRAPHIEGEEIGNETE BILDEMPFANGSSCHICHT FÜR TRAGBARE DATENTRÄGER UND TRAGBARER DATENTRÄGER**
IMAGE RECEIVING LAYER SUITABLE FOR THERMOGRAPHY FOR PORTABLE DATA CARRIERS, AND PORTABLE DATA CARRIER
COUCHE DE RECEPTION D'IMAGE ADAPTEE A LA THERMOGRAPHIE, DESTINEE A DES SUPPORTS DE DONNEES PORTATIFS, ET SUPPORTS DE DONNEES PORTATIFS CORRESPONDANTS

(30) Priorität: 17.06.2005 DE 102005028161
(43) Veröffentlichungstag der Anmeldung: 12.03.2008
(73) Patentinhaber: Giesecke & Devrient GmbH, 81677 München (DE); Sukano Management+Services AG, 8834 Schindellegi (CH)
(72) Erfinder: RIEDL, Josef, 85395 Attenkirchen (DE); GANZ, Daniel, 6417 Sattel (CH); FREI, Willy, 6006 Luzern (CH); SCHANZER, Christian, 8645 Jona (CH)
(86) Internationale Anmeldenummer: PCT/EP2006/005798
(87) Internationale Veröffentlichungsnummer: WO 2006/133953

(56) Entgegenhaltungen:
- WO-A-2005/042242
- DE-A1- 10 057 231
- GB-A- 2 344 785
- US-A- 5 928 788
- PATENT ABSTRACTS OF JAPAN Bd. 2003, Nr. 12, 5. Dezember 2003 (2003-12-05) -& JP 2004 025743 A (SUMITOMO BAKELITE CO LTD), 29. Januar 2004 (2004-01-29) in der Anmeldung erwähnt

## Beschreibung

Gegenstand der Erfindung ist die Aufbringung von graphischer Information auf einen tragbaren Datenträger mittels eines Thermographieverfahrens. Insbesondere richtet sich die Erfindung auf die Thermopersonalisierung von Identifikationskarten wie Bankkarten, Führerscheinen oder Ausweisen.

Ein tragbarer Datenträger mit einer Bildempfangsschicht, die durch ein Thermotransferverfahren bedruckbar ist, ist aus der US 2005/0035590 bekannt. Der darin beschriebene tragbare Datenträger hat die Gestalt eines I-dentifikationsdokumentes und basiert auf einer Kernschicht, die u.a. aus Polycarbonat oder Polyethylenterephtalat (PET) bestehen kann, auf welche eine Laminierschicht aufgebracht ist, die aus einem transparenten Material besteht wie etwa Polycarbonat, Polypropylen, ABS-Copolyester oder thermischem Kunststoff. Auf die Laminierschicht ist eine Bildempfangsschicht aufgebracht, die sich insbesondere zum Bedrucken durch Thermosublimation, auch als D2T2 ("Die Diffusion Thermal Transfer") bekannt, eignet. Die Bildempfangsschicht besteht aus Polyvinylchlorid (PVC); daneben wird eine Vielzahl möglicher Alternativmaterialien angegeben, u. a. Polystyrol und seine Copolymere. Die vorgeschlagene Karte gestattet ein zuverlässiges Bedrucken durch Thermosublimation. Allerdings ist das für die Bildaufnahmeschicht verwendete PVC hinsichtlich seiner Umweltvertäglichkeit und seiner Recyclebarkeit problematisch. PVC-beschichtete Karten besitzen zudem eine verhältnismäßig geringe Haltbarkeit, was ihre Eignung für langlebige Anwendungen, wie etwa Ausweiskarten, beeinträchtigt.

Aus der US 5,928,788 ist ein mehrschichtiger Datenträger bekannt, der aus einer opaken Kernschicht besteht, auf welche beidseitig jeweils mit einer Deckschicht von modifiziertem Polyester (PETG) abgedeckt ist. In die PETG-Schicht werden mittels eines Lasers Daten eingebracht. Insbesondere zur Verbesserung Ihrer Eignung zur Beschriftung mittels Laser können den PETG-Schichten Zusatzstoffe beigegeben sein. Die Verbindung der Schichten erfolgt durch laminieren. Um dabei ein Anhaften der Deckschichten an dem Laminierwerkzeug zu verhindern, werden die Deckschichten an den Außenseiten mit Anti-Blockmitteln angereichert. Die Deckschichten werden dabei als zweilagiger Schichtenverbund durch Coextrusion einer mit Antiblockmittel angereicherten PETG-Lage und einer aus reinem PETG bestehenden Lage gewonnen. Aus dem Patent Abstracts of Japan JP 2004042358 A ist eine Bildempfangsschicht bekannt, die zur Aufnahme von Druckmustern geeignet ist, die durch Thermosublimation aufgebracht werden. Die vorgeschlagene Bildaufnahmeschicht besteht aus einer Kernschicht, auf die eine Wärmeisolationsschicht aus Polystyrol aufgebracht ist, auf der wiederum sich eine Akzeptorschicht befindet, welche ein färbbares Harz enthält. Die Bildaufnahmeschicht soll insbesondere für IC-Karten eingesetzt werden.

Aus der DE 100 57 231 ist desweiteren ein mulitfunktionaler Kartenkörper bekannt, der durch Lamination mehrerer Schichten gebildet ist, wobei wenigstens eine der Schichten durch Coextrusion aus wenigstens zwei Kunststoffen erzeugt wurde. Als Ausgangsmaterial für die coextrudierte Schicht wird u.a. PETG vorgeschlagen.

Aus der WO 2005/042242 A2 ist ein Schichtaufbau für Identifikationsdokumente, etwa Pässe, bekannt, der aus einer Folge von verschiedenen Polyestermaterialien besteht. Der vorgeschlagene Schichtaufbau besitzt eine gute Langzeitstabilität und läßt sich direkt mit einer Kernschicht durch Laminieren verbinden.

Aus der JP 2004025743 A ist weiterhin eine für das Drucken mittels Transferthermographie geeignete Plastikkarte bekannt, die einer zunehmenden Nachfrage nach nicht-PVC-Karten gerecht wird. Vorgeschlagen wird eine Karte mit einer auf ABS, PETG oder Polycarbonat basierenden Kernschicht und einer auf denselben Materialien basierenden Überschicht, die dabei jedoch einen Anteil von mindestens 20 Gew. % ABS enthält. Derartige ABS-haltige Bildempfangsschichten erwiesen sich in eigenen Versuchen bei Anwendung in Verbindung mit Thermosublimationsverfahren als nicht zufriedenstellend.

GB 2 344 785 A1 offenbart einen Schichtaufbau bestehend aus einer Polyesterträgerschicht und einer darauf aufgebrachten leitfähigen Schicht, welche aus einem Gemisch von Polyester, Polystyrol und weiteren Stoffen besteht. Die weiteren Stoffe bewirken die Leitfähigkeit und sind unverzichtbarer, elementarer Bestandteil des beschriebenen Schichtaufbaus. Ein zur Herbeiführung einer Leitfähigkeit geeigneter weiterer Stoff ist insbesondere Kohlenstoff. Die Schichtdicke der leitfähigen Schicht liegt zwischen 0,1 und 1,2 mm. Auf Maßnahmen zur Ausgestaltung der leitfähigen Schicht als Bildempfangsschicht geht die Schrift nicht ein.

Um die Ausbildung von Materialerhebungen beim Stanzen zu vermeiden und um die Temperaturfestigkeit zu verbessern, ist aus der JP 11189708 A weiter ein Vorschlag zur Verbesserung der Härte von Kartenmaterial bekannt, der berücksichtigt, daß PVC enthaltende Karten aus Umweltschutzgründen zukünftig weniger akzeptiert werden. Vorgeschlagen wird die Verwendung eines Materialgemisches aus PETG und Polycarbonat, wobei das PETG zu einem Anteil von 10% bis 70% durch andere Materialien modifiziert wird. Als Modifikationsmaterial wird u.a. AAS (Methacrylat -Acryl-Styrol) genannt. Das vorgeschlagene Material besitzt gute mechanische Eigenschaften, ist aber nicht ohne weiteres für mehrschichtige, laminierte Kartenkörperaufbauten geeignet.

Der Erfindung liegt die Aufgabe zugrunde, eine zur Aufbringung auf tragbare Datenträger geeignete Bildempfangsschicht auf Polyesterbasis anzugeben, auf die durch Transferthermographie, insbesondere durch Thermosublimation graphische Information aufgebracht werden kann.

Diese Aufgabe wird gelöst durch eine Bildempfangsschicht mit den Merkmalen des Anspruchs 1 sowie einem damit ausgerüsteten tragbaren Datenträger mit den Merkmalen des Anspruchs 6. Die Aufgabe wird weiterhin gelöst durch ein Verfahren zur Herstellung einer Bildempfangsschicht gemäß dem unabhängigen Anspruch 9 sowie ein Verfahren zur Herstellung eines tragbaren Datenträgers gemäß dem unabhängigen Anspruch 10.

Die erfindungsgemäße Bildempfangsschicht zeichnet sich dadurch aus, daß sie zuverlässig bildpunktweise in einem Transferthermographieverfahren mit graphischer Information versehen werden kann, wobei sie sich gleichmaßen für das Thermotransfer- wie für das Thermosublimationsverfahren eignet. Zur Durchführung der Transferthermographie können dabei übliche Anlagen eingesetzt werden; spezielle Anpassungen zur Anwendung für tragbare Datenträger sind nicht erforderlich. Die erfindungsgemäße Bildempfangsschicht hat den Vorteil, daß bei Verwendung des Thermotransferverfahrens das eingesetzte Farbträgerband nicht an ihr haftet. Es entstehen deshalb keine Klebeffekte, die zu unerwünschten Farbübertragungen vom Farbträgerband auf die Bildempfangsschicht führen. Dadurch kann auch im Thermotransferverfahren eine bildpunktweise Farbübertragung z.B. mittels Nadeln erfolgen. Sowohl bei Verwendung der Thermosublimation wie beim Thermotransfer erfolgt eine deutliche, kontrollierte Farbübertragung. Ein weiterer Vorteil der erfindungsgemäßen Bildaufnahmeschicht besteht darin, daß auch eine über die graphische Information zu deren Schutz aufgebrachte Deckschicht gut an ihr haftet. Durch ihren Aufbau in einem mehrlagigen Schichtenverbund aus Trägerschicht und Akzeptorschicht läßt sich die erfindungsgemäße Bildempfangsschicht problemlos auf zur Datenträgerherstellung übliche Kernschichten laminieren. Die Laminiereigenschaften der Bildempfangsschicht werden von der Trägerschicht bestimmt und nicht von der Beschaffenheit der Akzeptorschicht beeinflußt. Indem die Bildaufnahmeschicht wesentlich auf PETG basiert, besitzt sie zudem eine gute Langzeitstabilität, und ist gut recyclebar und damit umweltverträglich.

In besonders vorteilhafter Weise läßt sich die erfindungsgemäße Bildempfangsschicht durch Coextrusion eines ersten Ausgangsstoffes in Form reinen PETGs sowie eines zweiten Ausgangsstoffes in Form eines Gemisches von PETG mit wenigstens 10 Gew.-% bis 90 Gew.-% Polystyrol herstellen. Die durch Coextrusion erhaltene Folie ist ohne besondere Zusatzmaßnahmen gut weiterverarbeitbar und erleichtert dadurch die Umsetzung des erfindungsgemäßeh Verfahrens.

Vorteilhaft ist das in der Akzeptorschicht enthaltene Polystyrol ein Styrolpolymer aus der Gruppe der Styrol-Copolymere. Besonders bevorzugt ist es Acrylnitril-Styrol-Acrylester (ASA). Dessen Gebrauch wird von der Ausführung der Bildempfangsschicht als Schichtenverbund unterstützt, in dem die Akzeptorschicht anteilig dünn gehalten werden kann. Dadurch läßt sich vor allem der unerwünschte Einfluß der farblichen Beschaffenheit von ASA - es besitzt eine etwas gelbliche Eigenfarbe - minimieren.

Ein Ausführungsbeispiel der Erfindung wird nachfolgend anhand der Zeichnung näher erläutert.

Die Figur zeigt einen Querschnitt durch eine auf einem tragbaren Datenträger aufgebrachte Bildempfangsschicht.

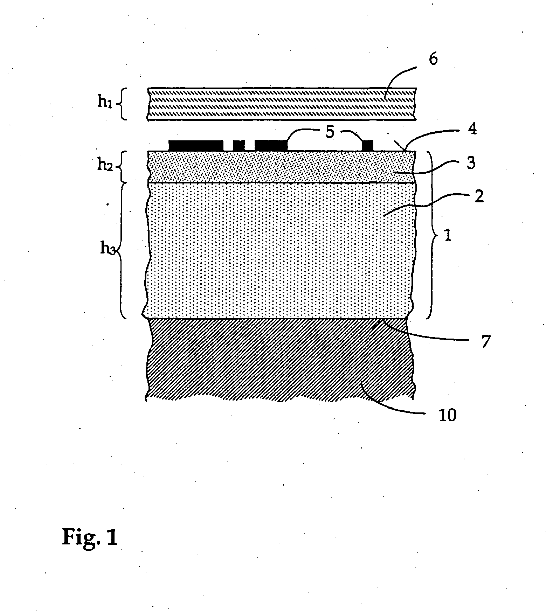

Figur 1 zeigt eine zweilagige Bildempfangsschicht 1 mit einer Trägerschicht 2 und einer Akzeptorschicht 3. Auf die Oberfläche 4 der Akzeptorschicht 3 ist eine graphische Information 5 in Form von alphanumerischen Zeichen und/ oder freigestalteten Bildelementen aufgebracht. Über der Oberfläche 4 mit der graphischen Information 5 liegt eine Deckschicht 6, die in der Figur der besseren Anschaulichkeit wegen getrennt von der Oberfläche 4 dargestellt ist. An der Unterseite 7 ist die Bildempfangsschicht 1 mit einer Kernschicht 10 eines nicht weiter gezeigten tragbaren Datenträgers verbunden. Bildempfangsschicht 1, Deckschicht 6 und Kernschicht 10 werden separat bereitgestellt, um durch geeignete Verbindungstechniken zusammengefügt zu werden. Typischweise liegen die Schichten 1 und 10 zunächst als Folien vor, die auf die Geometrie des tragbaren Datenträgers zugeschnitten und dann zusammengefügt werden. Die Deckschicht 6 kann ebenfalls als dünne Folie vorliegen oder wird als Lack aufgebracht.

Der tragbare Datenträger, auf dessen Kernschicht 10 die Bildempfangsschicht 1 aufgebracht wird, ist typischerweise eine übliche Scheckkarte, Geldkarte, Bankkarte, Ausweis, Führerscheinkarte, Datenseite für ein Paßbuch, SIM-Karte oder eine vergleichbare Chip-, Smart- oder IC-Karte im Scheckkarten- oder einem anderen gebräuchlichen Kartenformat, auf der sich eine Identitäts- oder eine sonstige einem Herausgeber oder einem Nutzer zugeordnete bildliche oder textuelle Information befindet. Unter tragbarem Datenträger sollen daneben auch andere personenbezogene Gegenstände mit zumindest einer planen Oberfläche und einer vergleichbaren Funktionalität verstanden werden wie etwa Armreife. Im folgenden wird als Ausführungsform für den tragbaren Datenträger eine Ausführung als Ausweiskarte im Kreditkartenformat zugrundegelegt. Ausweiskarten dieser Art und ihre Herstellung sind hinlänglich bekannt, etwa aus dem "Handbuch der Chipkarten" W. Rankl, W. Effing, Hansa-Verlag München, 4. Auflage. Sie beinhalten insbesondere eine Kernschicht 10, die einlagig ausgebildet sein kann, vorzugsweise aber ein Laminat aus mehreren Teillagen ist. Die Kernschicht 10 basiert vorzugsweise auf Polykarbonat oder auf Polyester und hat eine Stärke von typischerweise 600 µm.

Die graphische Information 5 wird durch farbige Bildpunkte gebildet, die durch ein Verfahren der Transferthermographie von einem Farbträgerband auf die Oberfläche 4 übertragen werden. Zum Einsatz kommt ein übliches Thermotransfer- oder ein übliches Thermosublimationsverfahren, wie es etwa in dem "Handbuch der Printmedien" H. Kipphahn, Springer Verlag Heidelberg, 2000, Kapitel 5.6 beschrieben ist. Die graphische Information 5 kann insbesondere ein Farbfoto beinhalten.

Grundmaterial der Trägerschicht 2 ist ein amorpher Polyester. In Betracht kommt insbesondere PETG, d.h. ein modifiziertes Polyeethylenterephthalat, wie es z.B. in der eingangs erwähnten EP 0 734 322 B1 beschrieben ist. Alternativ kann die Trägerschicht 2 aus reinem Polyester oder anderen Polyester-Modifikationen bestehen. In einer weiteren Variante kann die Trägerschicht 2 auch aus Polycarbonat bestehen. Die Trägeschicht 2 besitzt eine Höhe h₃ von typischerweise 100 µm.

Ausgangsmaterial der Akzeptorschicht 3 ist ebenfalls PETG, dem im Unterschied zur Trägerschicht 2 jedoch mit einem Anteil von wenigstens 10 % Gew.-% ein Styrolpolymer beigemischt ist. In Betracht kommt insbesondere ein Styrolpolymer aus der Gruppe der Acrylnitril-Styrol-Acrylester (ASA). Der Styrolpolymeranteil in der Akzeptorschicht 3 kann bis zu 90 % betragen. Das genaue Mischungsverhältnis hängt von der tatsächlichen chemischen Beschaffenheit des verwendeten Styrolpolymers ab, bei Verwendung von ASA z.B. davon, in welchem Verhältnis die in ASA enthaltenen Einzelkomponenten zueinander stehen. Weiter hängt das genaue Mischungsverhältnis davon ab, mittels welcher Transferthermographietechnik - Thermotransfer oder Thermosublimation - der Transfer der graphischen Information 5 erfolgt und welches Farbmaterial zur Erzeugung der Bildpunkte übertragen wird. Als Richtwert bei Einsatz der Thermosublimation hat sich ein Anteil von 70 Gew.-% Styrolpolymer in der Akzeptorschicht 3 bewährt. Die Akzeptorschicht 3 ist dünner als die Trägerschicht 2 und besitzt eine Höhe h₂ von typischerweise 10 µm.

Besonders der Akzeptorschicht 3, aber auch der Trägerschicht 2 kann zur besseren Verarbeitbarkeit bei der Folienherstellung wie bei der Kartenherstellung, hier insbesondere zur Vermeidung des Anhaftens der Akzeptorschicht 3, ein Gleit- und/oder Antiblockmittel beigefügt sein.

Die Deckschicht 6 dient vor allem zum Schutz der graphischen Information 5. Sie ist transparent und besitzt eine geringe Höhe h₁ von typischerweise 3 bis 25 µm. Die Deckschicht 6 wird nach Aufbringen der graphischen Information 5 durch gleichzeitige Anwendung von Wärme und Druck aufgebracht. Zweckmäßig erfolgt die Aufbringung der Deckschicht 6 unmittelbar nach dem Aufbringen der graphischen Information 5 z B. in einem üblichen "Hotstamping"-Prozeß bei einer Temperatur von 100 bis 190°. Als Grundmaterial der Deckschicht 6 kommt ein Lack in Betracht, wie er beispielsweise von der Firma DATACARD unter der Bezeichnung "Topcoat" erhältlich ist. Möglich ist auch die Verwendung einer z.B. 25 µm dünnen Folie aus PET.

Die Bildempfangsschicht 1 wird als Schichtenverbund in Form einer einzelnen Folie bereitgestellt. Diese Folie wird durch Coextrusion von Polymerschmelzen der Ausgangsmaterialien für die Trägerschicht 2 und für die Akzeptorschicht 3 in einer Anlage mit wenigstens 2 Extrudern gewonnen. Die Polymerschmelzen aus dem Extruder für die Trägerschicht 2 und dem Extruder für die Akzeptorschicht 3 werden in einer einzelnen Düse zusammengeführt; alternativ werden sie aus zwei Düsen ausgegeben und anschließend unmittelbar zusammengewalzt. Die Prinzipien der jeweils zugrundeliegenden Folienherstellung sind an sich bekannt und etwa in dem Buch "Kunststoff-Folien, J. Mendwick, Carl Hanser Verlag München, 1994, insb. Kapitel 3.2.2 und 3.2.8 beschrieben. Das Prinzip der zweidüsigen Ausgabe mit nachfolgendem Walzen ist ferner auch in der eingangs genannten US 5928788 A erläutert.

Mit der vorgeschlagenen Bildempfangsschicht 1 läßt sich eine Ausweiskarte wie folgt herstellen. Es wird eine Kernschicht 10 bereitgestellt, die typischerweise durch Laminieren mehrerer Einzellagen erzeugt wurde. Weiterhin wird durch Coextrusion von Trägerschicht 2 und Akzeptorschicht 3 die Bildempfangsschicht 1 erzeugt und bereitgestellt. Bildempfangsschicht 1 und Kernschicht 10 werden sodann durch einen weiteren Laminierschritt miteinander verbunden, wobei die Verbindung so erfolgt, daß die Trägerschicht 2 zwischen der Akzeptorschicht 3 und der Kernschicht 10 liegt. Die Laminierschritte erfolgen mit für die Herstellung von Ausweiskarten üblichen Laminierparametern. Auf den so vorbereiteten Ausweiskartenkörper wird anschließend durch Transferthermographie die graphische Information 5 aufgebracht. Nachfolgend wird in einem "Hotstamping"-Schritt die Deckschicht 6 auf die Oberfläche 4 mit der graphischen Information 5 aufgebracht.

Unter Beibehaltung des grundlegenden Gedankens, eine durch Coextrusion gewonnene zweilagige Bildempfangsschicht 1 auf Basis von PETG zu verwenden, wobei die Akzeptorschicht 3 aus einem Gemisch von PETG mit einem Styrolpolymer besteht, gestattet die Erfindung eine Vielzahl von sachgemäßen Ausgestaltungen. So können Bildempfangsschichten 1 selbstverständlich auf zwei Seiten einer Kernschicht 10 angeordnet und jeweils mit graphischer Information 5 versehen sein. Trägerschicht 2 und Akzeptorschicht 3 können weiter auch jeweils mehrlagig ausgeführt sein, wobei die mehreren Lagen analog zum zweilagigen Aufbau coextrudiert werden. Einzelnen Lagen können ferner Zusatzstoffe zur Erzielung bestimmter gewünschter Materialeigenschaften, etwa erhöhter Härte oder erhöhter Elastizität, beigefügt sein.

## Patentansprüche

1. Bildempfangsschicht zur Aufnahme von durch Transferthermographie übertragbarer graphischer Information, **dadurch gekennzeichnet, daß** die Bildempfangsschicht (1) als zweilagiger Schichtenverbund aus einer Trägerschicht (2) und einer Akzeptorschicht (3) ausgebildet ist, wobei die Trägerschicht (2) im wesentlichen aus einem amorphen Polyester, insbesondere PETG, und die Akzeptorschicht (3) im wesentlichen aus einem Gemisch von PETG mit wenigstens 10 Gew.-% bis 90 Gew.-% eines Styrolpolymers besteht, wobei das Styrolpolymer entweder ein Acrylnitril-Styrol-Acrylester (ASA) oder Polystyrol ist.

2. Bildempfangsschicht nach Anspruch 1, **dadurch gekennzeichnet, daß** der Schichtenverbund (1) als eine einzelne, durch Coextrusion hergestellte Folie ausgebildet ist.

3. Bildempfangsschicht nach Anspruch 1 oder 2, **dadurch gekennzeichnet, daß** sie eine Gesamthöhe von 80 bis 120 µm aufweist, wovon eine Höhe (h₂) von 5 bis 20 µm auf die Akzeptorschicht (3) entfällt.

4. Bildempfangsschicht nach Anspruch 1 oder 2, **dadurch gekennzeichnet, daß** der Akzeptorschicht (3) ein Gleit- und/ oder Antiblockmittel zugesetzt ist.

5. Bildempfangsschicht nach Anspruch 1 oder 2, **dadurch gekennzeichnet, daß** die Trägerschicht (2) aus Polycarbonat besteht.

6. Mehrlagig ausgebildeter tragbarer Datenträger mit einer Kernschicht und einer Bildempfangsschicht, auf die durch Transferthermographie eine graphische Information aufgebracht ist, **dadurch gekennzeichnet, daß** die Bildempfangsschicht (1) eine Trägerschicht (2) aus PETG sowie eine Akzeptorschicht (3) aus einem Gemisch von PETG mit 10 Gew.-% bis 90 Gew.-% eines Styrolpolymers umfaßt, wobei das Styrolpolymer entweder Polystyrol oder ein Acrylnitril-Styrol-Acrylester (ASA) ist.

7. Tragbarer Datenträger nach Anspruch 6 **dadurch gekennzeichnet, daß** die Bildempfangsschicht(1) auf einer Kernschicht (10) aus Polyester angeordnet ist.

8. Tragbarer Datenträger nach Anspruch 7, **dadurch gekennzeichnet, daß** auf die Oberfläche (4) der Akzeptorschicht (3) eine transparente Deckschicht (6) aufgebracht ist.

9. Verfahren zur Herstellung einer Bildempfangsschicht zur Aufnahme von durch Transferthermographie aufgebrachter graphischer Informationen **dadurch gekennzeichnet, daß** eine erste Polymerschmelze von PETG sowie eine zweite Polymerschmelze von einem Gemisch von PETG und mindestens 10 Gew.-% bis 90 Gew.-% eines Acrylnitril-Styrol-Acrylesters (ASA) oder von Polystyrol zu einem Schichtenverbund coextrudiert werden.

10. Verfahren zur Herstellung eines tragbaren Datenträgers, insbesondere einer Ausweiskarte, auf den durch Transferthermographie eine graphische Information aufgebracht werden kann, **gekennzeichnet durch** folgende Schritte:
- Bereitstellen einer Kernschicht (10) auf Polyester- oder Polycarbonatbasis,
- Bereitstellen eines ersten, im wesentlichen PETG enthaltenen Ausgangsmaterials,
- Bereitstellen eines zweiten Ausgangsmaterials, das aus ein Gemisch aus PETG und wenigstens 10 Gew. -% bis 90 Gew.-% eines Styrolpolymers besteht, wobei das Styrolpolymer entweder Polystyrol oder ein Acrylnitril-Styrol-Acrylester (ASA) ist
- Coextrudieren der beiden Ausgangsmaterialien zu einer Bildempfangsschicht (1), die eine Trägerschicht (2) und eine Akzeptorschicht (3) aufweist, wobei das erste Ausgangsmaterial die Trägerschicht (2) bildet und das zweite Ausgangsmaterial die Akzeptorschicht (3),
- Laminieren der Bildempfangsschicht (1) und der Kernschicht (10), so daß die Trägerschicht (2) zwischen der Akzeptorschicht (3) und der Kernschicht (10) liegt.

## Claims

1. An image-receiving layer for receiving graphic information transferable by transfer thermography, **characterized in that** the image-receiving layer (1) is configured as a two-layer layer composite of a carrier layer (2) and an acceptor layer (3), wherein the carrier layer (2) substantially consists of an amorphous polyester, in particular PETG, and the acceptor layer (3) substantially consists of a mixture of PETG with at least 10 wt% to 90 wt% of a styrene polymer, wherein the styrene polymer is either an acrylonitrile-styrene acrylate (ASA) or polystyrene.

2. The image-receiving layer according to claim 1, **characterized in that** the layer composite (1) is configured as a single foil manufactured by co-extrusion.

3. The image-receiving layer according to claim 1 or 2, **characterized in that** it has an overall height of 80 to 120 µm, of which a height (h₂) of 5 to 20 µm is allotted to the acceptor layer (3).

4. The image-receiving layer according to claim 1 or 2, **characterized in that** a lubricant and/or antiblocking agent is added to the acceptor layer (3).

5. The image-receiving layer according to claim 1 or 2, **characterized in that** the carrier layer (2) consists of polycarbonate.

6. A portable data carrier of multilayer configuration, with a core layer and an image-receiving layer, to which a graphic information item is applied by transfer thermography, **characterized in that** the image-receiving layer (1) comprises a carrier layer (2) of PETG as well as an acceptor layer (3) of a mixture of PETG with 10 wt% to 90 wt% of a styrene polymer, wherein the styrene polymer is either polystyrene or an acrylonitrile-styrene acrylate (ASA).

7. The portable data carrier according to claim 6, **characterized in that** the image-receiving layer (1) is arranged on a core layer (10) of polyester.

8. The portable data carrier according to claim 7, **characterized in that** a transparent cover layer (6) is applied to the surface (4) of the acceptor layer (3).

9. A method for manufacturing an image-receiving layer for receiving graphic information items applied by transfer thermography, **characterized in that** a first polymer melt of PETG as well as a second polymer melt of a mixture of PETG and at least 10 wt% to 90 wt% of an acrylonitrile-styrene acrylate (ASA) or of polystyrene are co-extruded to form a layer composite.

10. A method for manufacturing a portable data carrier, in particular an identification card, to which a graphic information item can be applied by transfer thermography, **characterized by** the following steps of:
- making available a core layer (10) on a polyester basis or polycarbonate basis,
- making available a first source material substantially containing PETG,
- making available a second source material consisting of a mixture of PETG and at least 10 wt% to 90 wt% of a styrene polymer, wherein the styrene polymer is either polystyrene or an acrylonitrile-styrene acrylate (ASA),
- co-extruding the two source materials to form an image-receiving layer (1) having a carrier layer (2) and an acceptor layer (3), wherein the first source material forms the carrier layer (2) and the second source material forms the acceptor layer (3),
- laminating the image-receiving layer (1) and the core layer (10), so that the carrier layer (2) lies between the acceptor layer (3) and the core layer (10).

## Revendications

1. Couche réceptrice d'image destinée à la réception d'information graphique transférable par thermotransfert, **caractérisé en ce que** la couche réceptrice d'image (1) est réalisée sous forme de composite à double couche consistant en une couche support (2) et une couche acceptrice (3), la couche support (2) se composant essentiellement d'un polyester amorphe, notamment PETG, et la couche acceptrice (3) se composant essentiellement d'un mélange de PETG avec au moins 10 pourcent à 90 pourcent par poids d'un polymère styrénique, le polymère styrénique étant soit un acrylonitrile-styrène-acrylate (ASA), soit du polystyrène.

2. Couche réceptrice d'image selon la revendication 1, **caractérisé en ce que** le composite multicouche (1) est réalisé sous forme d'un film à part fabriqué par coextrusion.

3. Couche réceptrice d'image selon la revendication 1 ou 2, **caractérisé en ce qu'**elle présente une hauteur totale de 80 à 120 µm, dont une hauteur (h₂) de 5 à 20 µm revient à la couche acceptrice (3).

4. Couche réceptrice d'image selon la revendication 1 ou 2, **caractérisé en ce qu'**un agent lubrifiant et/ou anti-bloquant est ajouté à la couche acceptrice (3).

5. Couche réceptrice d'image selon la revendication 1 ou 2, **caractérisé en ce que** la couche support (2) se compose de polycarbonate.

6. Support de données portable réalisé sous forme multicouche, comprenant une couche noyau et une couche réceptrice d'image sur laquelle une information graphique est appliquée par thermotransfert, **caractérisé en ce que** la couche réceptrice d'image (1) comprend une couche support (2) en PETG ainsi qu'une couche acceptrice (3) composée d'un mélange de PETG avec 10 pourcent à 90 pourcent par poids d'un polymère styrénique, le polymère styrénique étant soit du polystyrène, soit un acrylonitrile-styrène-acrylate (ASA).

7. Support de données portable selon la revendication 6, **caractérisé en ce que** la couche réceptrice d'image (1) est agencée sur une couche noyau (10) en polyester.

8. Support de données portable selon la revendication 7, **caractérisé en ce que**, sur la surface (4) de la couche acceptrice (3), une couche de recouvrement transparente (6) est appliquée.

9. Procédé de fabrication d'une couche réceptrice d'image (1) destinée à la réception d'informations graphiques appliquées par thermotransfert, **caractérisé en ce qu'**une première masse fondue du polymère de PETG ainsi qu'une deuxième masse fondue du polymère d'un mélange de PETG et d'au moins 10 pourcent à 90 pourcent par poids d'un acrylonitrile-styrène-acrylate (ASA) ou de polystyrène sont coextrudés de manière à obtenir un composite multicouche.

10. Procédé de fabrication d'un support de données portable, notamment d'une carte d'identification, sur laquelle une information graphique peut être appliquée par thermotransfert, **caractérisé par** les étapes suivantes :
- mise à disposition d'une couche noyau (10) à base de polyester ou de polycarbonate,
- mise à disposition d'un premier matériau de départ contenant essentiellement du PETG,
- mise à disposition d'un second matériau de départ se composant d'un mélange de PETG et d'au moins 10 pourcent à 90 pourcent par poids d'un polymère styrénique, le polymère styrénique étant soit du polystyrène, soit un acrylonitrile-styrène-acrylate (ASA),
- co-extrusion des deux matériaux,de départ de manière à obtenir une couche réceptrice d'image (1) qui comporte une couche support (2) et une couche acceptrice (3), le premier matériau de départ constituant la couche support (2) et le second matériau de départ constituant la couche acceptrice (3),
- laminage de la couche réceptrice d'image (1) et de la couche noyau (10), de telle sorte que la couche support (2) se trouve entre la couche acceptrice (3) et la couche noyau (10).
